(19) Europäisches Patentamt
European Patent Office
Office européen des brevets

(11) Publication number: **0 242 361 B1**

(12) **EUROPEAN PATENT SPECIFICATION**

(45) Date of publication of patent specification:
**25.09.91 Bulletin 91/39**

(51) Int. Cl.⁵: **C08J 9/00**

(21) Application number: **86900314.5**

(22) Date of filing: **04.12.85**

(86) International application number:
**PCT/SE85/00500**

(87) International publication number:
**WO 86/03505 19.06.86 Gazette 86/13**

(54) **FIBRE-REINFORCED FOAM- OR CELLULAR BODIES.**

(30) Priority: **04.12.84 SE 8406134**

(43) Date of publication of application:
**28.10.87 Bulletin 87/44**

(45) Publication of the grant of the patent:
**25.09.91 Bulletin 91/39**

(84) Designated Contracting States:
**AT BE CH DE FR GB IT LI NL SE**

(56) References cited:
**SE-C- 395 022**
**US-A- 3 716 449**
**See also references of WO8603505**

(73) Proprietor: **ERECTA AG**
**Gartenstrasse 2**
**CH-6300 Zug (CH)**

(72) Inventor: **ERECTA AG**
**Gartenstrasse 2**
**CH-6300 Zug (CH)**

(74) Representative: **Berg, Sven Anders et al**
**H. ALBIHNS PATENTBYRA AB P.O. Box 3137**
**S-103 62 Stockholm (SE)**

## Description

The present invention relates to a process for producing fibre-reinforced foam- or cellular bodies by dispersing fibres in a liquid together with surface tension reducing and expanding agents.

The reinforcement of cellular bodies with fibres entails significant advandages. As with fibre reinforcement of solid bodies made of plastic, cement etc. the strength characteristics of the body are increased. Furthermore low-grade materials such as paper waste obtained in the course of refuse disposal can be used for many purposes so as to produce high-grade products.

The principal problem in producing fibre-reinforced foam bodies consists in the difficulty of producing, by economically feasible methods, a body having a sufficiently low density. Previously, for instance, an insulating material was produced from wood fibres, known as a highly-porous board. This was produced by filling a box having a screen at the bottom with an aqueous suspension of mechanical wood pulp or breaker pulp and allowing it to drain of its own accord until a cake was formed, which was then dried. This process is too slow and requires too much heat for contemporary, reasonably economical production. In addition the density becomes too high, by comparison with other insulating materials such as mineral fibres and polystyrene foam. This product is therefore not competitive by comparison with the latter

Attempts at "expanding" fibre suspensions in liquids such as water with the aid of gas-emitting additives, i.e. expanding agents, fail as soon as one reaches such fibre concentrations as to ensure that the foam body formed retains its volume in the course of drying, and if possible also its shape. The same or higher fibre concentrations are in addition required lest the process entail unacceptable heat consumption and accordingly costs.

If the gas bubbles formed as a foam body expands are, at these fibre concentrations, not able to press or pry apart the fibres so as to form cavities, it may happen that the bubbles burst. Instead the gas escapes between the fibres.

According to the invention this problem is solved by adding to the liquid in which the fibres are dispersed, in addition to the surface tension reducing and expanding agents, viscosity-increasing polymers soluble or highly swellable in the liquid, so that the liquid at least during foaming has a viscosity of more than 40 m Pa·s (cP), and subsequently evaporating said liquid.

The results are however better if the viscosity is above 100 m Pa·s (cP) and even if one increases the viscosity to 1000 m Pa·s (cP) one can improve the foaming process by further increasing the viscosity.

If the viscosity-increasing polymer is not added in a sufficient amount to ensure effective binding of the fibres after the foam has dried, a suitable sizing agent is also added.

By way of expanding agents use may be made of such as consist of two components e.g. Al powder + alkali or hydrogen peroxide + catalyst. However, the expanding agent may also consist of one component, e.g. carbon dioxide, which is dissolved in the dispersion liquid (as a rule water) or frecn or a low-boiling solvent which is emulsified into the fibre suspension, or air or another gas which by mechanical working is dispersed in the fibre suspension. These single-component expanding agents are advantageously added subject to pressure and released by lowering the pressure, possibly in conjunction with a preceding increase in temperature. Also dispersion liquid may be included in this category, i.e. if the expansion is effected in such a way as to heat the pressurised suspension beyond the boiling point of the liquid, whereupon the pressure is quickly lowered so that the liquid becomes wholly or partly gaseous.

Use may also be made of such single-component agents as are dissociated into gases e.g. bicarbonate, azo- and diazo compounds etc. when subjected to increased temperatures.

By these methods fibre-reinforced foam bodies can be produced, with densities as low as about 0.04 g/cm$^3$ or 40 kg/m$^3$ and with a fibre content of 60 - 80 per cent by weight with relatively large and uneven pores or cells.

However, with several application spheres e.g. insulating materials, packaging bodies for sensitive instruments and apparatus as well as certain decoration and furnishing materials it is essential to achieve lower densities and a finer, more even pore structure.

This is achieved by the addition according to the invention of the above viscosity-increasing polymer. The polymer should be soluble or highly swellable in the dispersion liquid. It could comprise both highly hydrophilic and highly hydrophobic groups. Polymers of this type are designated below by the acronym philophobe.

An example of such a philophobe is ethylhydroxyethylcellulose, where the hydroxyethyl groups are hydrophile and the ethyl groups are hydrophobic. Such a material bearing the brand designation Bermocoll® E 481 has been used with good results to produce foam bodies in accordance with the invention. However, its usefulness is limited by the fact that at temperatures above 60 - 70°C it is precipitated from the aqueous solution.

Philophobes of wider applicability can be produced simply by combining polymeric carboxylic acids, e.g. carboxymethylcellulose, polyacrylic acid etc. with higher alkyl or aralkyl amines. This is done in such proportions as to ensure that a part, e.g. half of the carboxylic groups in the polymer is taken up by the amines whereas the other part is neutralised with a base, e.g. caustic soda solution, ammonia, triethanolamine etc., which in combination with polycarboxylic acids gives rise to water-soluble salts. One might think that such a combination would result in a part of the polycarboxylic acid being saturated with higher amines and precipitated, the rest remaining in a state of solution. This is however not the case if the mixture is prepared carefully without obtaining a homogeneous solution.

In the same way polymeric bases can be combined, e.g. polyethylene imine,with fatty acids, e.g. stearic acid or oleic acid, and a strong acid such as hydrochloric acid to produce effective philophobes.

It stands to reason that philophobes can be produced already in the course of polymerisation by polymerising together intensely hydrophile monomers such as acrylic acid or acrylic amide with intensely hydrophobic monomers such as vinylstearate or dodecylvinyl ether or octymethacrylate etc.

The following examples indicate some embodiments of the invention without however limiting the invention to these embodiments:

Ex. 1. Newspaper waste is dispersed in water and dewatered so as to produce a 20% suspension. The latter is mixed in a kneading machine with 4% Bermocoll E 481 (ethylhydroxyethylcellulose with a polymerisation degree of about 2000 and a substitution degree of 2.0 hydroxyethyl and about 0.9 ethyl), 0.3% Berol® 09 (tensides, nonylphenylpolyglycolether), 0.4% Fe Cl$_3$.6 H$_2$O as well as 1.6% of 25% ammonia, all referred to the weight of the fibre suspension. Following thorough mixing 10% of 35% hydrogen peroxide is added, mixed rapidly in the kneading machine and then transferred from the stock moulds for TV set foam packaging whereupon the stock is allowed to expand and to fill out the moulds. The the foam is dried in the moulds at a temperature of 60°C, whereupon the foam bodies formed are taken out of the moulds. They are strong and elastic and have a density of about 28 kg/m$^3$.

Ex. 2. A 20% suspension of newspaper waste in water is mixed in the kneading machine together with 5% wheat flour, 1% of 25% ammonia and 1% water-glass, all referred to the weight of the fibre suspension. The water-glass contains 42% sodium silicate having a mol ratio of SiO$_2$:Na$_2$O of 3.4. The suspension is transferred by a conveyor screw to another mixer and at the same time heated to 100°C so that the starch and gluten in the wheat flour are dissolved. Then the following two solutions are mixed in, their composition being given in % of the initial fibre suspension:

1. 1% Cekol® HDEG (highly viscous Na-carboxymethylcellulose) is dissolved in 10% water and mixed carefully with a paste prepared by melting together 0.35% Amin B 11 (a mixture of primary alkyl amines having an average molecular weight of 320), 0.17% Berol 292 (tenside, nonylphenylpolyglycolether) and 1.18% water.

The amount of Amin B 11 is equivalent to half the carboxymethyl groups in the Cekol. Then 0.1% of 37% hydrochloric acid is mixed in, equivalent to the amount of Amin B 11.

2. 0.2% Separan® PG 211 (polyacrylic amide with a polymerisation degree of 70,000 - 100,000, containing traces of free carboxyl groups) is dissolved in 10% water and mixed with a paste prepared by melting together 0.01% Amin B 11, 0.005% Berol 292 and 0.035% water.

Following these two solutions also 1% Tensid 7151 (cocostearic acid diethanolamide) is mixed in.

The suspension, the rheological characteristics of which are now closer to those of a soft plastic mass or dough than to those of a 15% paper fibre suspension, is transferred to a third mixer where air subject to a pressure of 10 bars (1 MPa) is worked in and dispersed in the stock. At the same time the temperature of the stock is increased to 110°C.

From the last mixer the stock is conveyed by means of a conveyor screw to a nozzle having the shape of a wide slot. Through this nozzle the stock passes out on to a conveyor belt of wire cloth, where it expands to its final volume and is introduced into an oven with a temperature of 120°C for drying.

The finished foam body has a density of 25 kg/m$^3$ and is suitable as an insulating material e.g. in the shape of insulating mats.

Instead of allowing the mass to expand freely the following method can be applied:

From the slotted nozzle the stock is prassed on to a paper web (kraftliner type paper) located on a moving wire track. Once the stock has expanded to foam or while it is in the process of expansion it is stripped by a doctor blade to a layer having a thickness of 10 mm. Then a paper web (kraftliner type) is placed on top, which supports a wire track travelling above the paper, rulers above the said track compressing the foam to a layer having a thickness of 5 mm, which is dried at 120°C to a laminate optionally suitable for use as corrugated board in packages, stiffening plates etc.

Instead of lining the moving wire tracks with kraftliner paper they can be strewn or sprayed with dry paper fibres of suitable composition, possibly in combination with a suitable size and in such a way as to form the paper on the track before it comes into contact with the expanding fibre suspension. The fibres sprayed on are held in position by means of vacuum boxes on the opposite side of the wire track before coming into contact with the expanding layer of fibre suspension.

Ex. 3. Into a 20% paper fibre suspension in water 2% polymethacrylic acid having a polymerisation degree of about 40,000 is mixed in and dissolved by addition of 2.1% triethanolamine equivalent to 60% of the carboxyl groups in the polymethacrylic acid. The polymer is then transferred to a philophobe by mixing in 2.25% Amin B 11 equivalent to 30% of the carboxyl groups in the polymer.

After mixing in 1% Tensid 7151 and 20% Polysar® latex 3705 (carboxylated polystyrene-butadiene latex with 41% dry substance which produces a soft, elastic film with good fibre-bonding capacity) air is worked in and dispersed in the stock while at the same time the temperature is increased to 110°C before the stock is passed out on to a conveyor belt, where it is allowed to expand, and is dried in an oven.

The resultant foam body, which has a density of about 40 kg/m$^3$, is soft and elastic and can be used as a staffing material in furniture etc.

Instead of cellulose and wood fibres use may of course be made also of other fibres such as synthetic textile fibres, glassfibres, metal fibres etc. In the same way the water can be replaced with other liquids, and the organic sizing agents wholly or partly with inorganic binding agents such as water-glass, cement, gypsum etc.

Ex. 4. Into a 9% paper fibre suspension are mixed 0.2% Separan PG 211, 2% Gum Guar Papsize® 7 (very highly polymeric polysaccharide, composed of mannos and galactos), 1% Tensid 7151, 1% Berol 292, 5% wheat flour, 1% of 25% ammonia, 1% ammoniumpolymethaphosphate and 18% gypsum powder (CaSO$_4$.1/2 H$_2$O), all of which substances are referred to the weight of the fibre suspension. The stock is transferred into a beater and beaten there until a foam is achieved having the foam value 2.8 cm$^3$/g.

The foam is spread by means of a doctor blade on a travelling web of glue-coated board impregnated with a fireproofing agent to a layer having a thickness of 12 mm, which is dried in an oven. Then a similar board is glued to the uncoated side of the foam and dried.

The laminate thus produced can be used in the same way as conventional plaster boards. By comparison with the latter it has the advantage of being lighter and stronger, i.e. less likely to form cracks and to break apart.

## Claims

1. A process for producing fibre reinforced foam or cellular bodies, by dispersing fibres in a liquid together with surface tension reducing and expanding agents, characterized in adding one or several viscosity increasing polymers which are soluble or highly swellable in the liquid, so that the liquid at least during foaming has a viscosity of more than 40 m Pa·s (cP), and subsequently evaporating said liquid.

2. Fibre reinforced foam or cellular bodies as produced according to Claim 1.

3. A process for producing materials usable as corrugated fibreboard, building elements and insulation mats, characterized in that the fibre reinforced foam body according to claim 2 is laminated on one, two or more sides with sheets or plates.

## Patentansprüche

1. Verfahren zur Herstellung faserarmierter Schaum- oder Zellkörper mittels Dispergierung von Fasern in einer Flüssigkeit zusammen mit die Oberflächenspannung herabsetzenden Stoffen und mit Treibmitteln, dadurch gekennzeichnet, dass ein oder mehrere in der Flüssigkeit lösliche oder sehr quellbare viskositätserhöhende Stoffe zugegeben werden, so dass wenigstens während des Aufschäumens die Flüssigkeit eine Viskosität von mehr als 40 m Pa·s hat, und nachträglich verdunstet.

2. Schaum - oder Zellkörper, faserarmiert, nach Anspruch 1) hergestellt.

3. Verfahren zur Herstellung von als Wellpapier, Baustoffe oder Isolierungsmatten verwendbaren Stoffen dadurch gekennzeichnet, dass der nach Anspruch 2) hergestellte faserarmierte Schaumkörper an einer, zwei oder mehreren Seiten mit Folien oder Platten laminiert wird.

## Revendications

1. Procédé pour la production de corps de mousse ou de cellules fibrearmés à l'aide de dispersion des fibres dans un liquide en y ajoutant des substances baissant la tension superficielle et des agents propulseurs (substances dégageant du gaz); procédé caractérisé par l'addition d'une ou plusieurs substances solubles ou facilement se gonflant dans le liquide en augmentant la viscosité de sorte que, au moins pendant le procédé, le liquide atteint une viscosité de plus de 40 mPa·s et s'évapore après le procédé.

2. Corps de mousse ou fibrearmés produits selon le procédé décrit dans le paragraphe 1) de la demande.

3. Procédé pour la production de matières utilisables comme papier ondulé, matériaux de construction ou pour des tapis isolants; procédé caractérisé par la lamination de la mousse fibrearmée - produit selon paragraphe 2) - à un, deux ou plusieurs côtés avec des plaques ou des feuilles.